# EUROPEAN PATENT SPECIFICATION

(11) **EP 3 222 898 B1**
(45) Date of publication and mention of the grant of the patent: **06.11.2019**
(21) Application number: 17162362.2
(22) Date of filing: 22.03.2017
(51) Int. Cl.: F16L 1/26

(54) **PIPE CONNECTOR**
ROHRVERBINDER
RACCORD DE TUYAU

(30) Priority: 23.03.2016 US 201662312306 P
(43) Date of publication of application: 27.09.2017
(73) Proprietor: Actuant Corporation, Menomonee Falls, WI 53051 (US)
(72) Inventor: TROMANS, David, Darlaston, West Midlands WS10 8LQ (GB)
(74) Representative: Vinsome, Rex Martin

(56) References cited:
- EP-A1- 0 241 195
- WO-A1-2011/072327
- WO-A1-2014/152904
- WO-A1-2015/017544
- GB-A- 2 529 739
- US-A- 3 999 782

## Description

### RELATED APPLICATION

The present application claims priority to U.S. Provisional Patent Application No. 62/312,306, filed March 23, 2016.

### FIELD

The present invention relates to pipe end seal assemblies and, more particularly, to a pipe end seal assembly with a sealing arrangement that inhibits degradation of a pipe end face.

### SUMMARY

Pipelines are employed in varied environments to carry many different types of media. For instance, pipelines can be located in both topside and subsea environments and may carry media ranging from portable water to petroleum-based gases and liquids. The pipes used in the pipeline are typically made of carbon steel, stainless steel, or a duplex, and can have various diameters. Furthermore, pressures within the pipeline can approach and exceed approximately 62.05 MPa (9000 psi).

MORGRIP® connectors, manufactured by Hydratight Limited, have proven to be a viable solution to repairing leaks in non-CRA clad/lined subsea pipelines. When a leak in the pipeline is detected, the damaged section is cut and removed from the pipeline. The appropriate MORGRIP® connectors are then installed onto the cut ends of the pipe. Finally, a splice or spool piece is positioned between and secured to the MORGRIP® connectors to reestablish a leak-free pipeline.

Typical mechanical connectors, however, require an end of a pipe to abut an inner shoulder within the connector to provide a reaction force that opposes a gripping force applied by the gripping mechanism, allowing the gripping mechanism to activate in order to grip the pipe. This requires that the pipe be cut precisely to length in order for the pipe to abut the inner shoulder to allow for gripping of the pipe to occur. Allowing for direct gripping of the pipe without an end of the pipe to abut an inner shoulder may reduce the precision required and thus may reduce labor, cost, etc. of pipe preparation.

GB 2529739 discloses a gripping device, such as a split clamp, sealing device and/or structural support, configured to grip, engage or fix onto a pipe, pipeline, conduit or other elongate member. The gripping device includes one or more gripping mechanisms configured to grip onto the pipe and first and second parts, wherein the first and second parts are disposed so as to circumferentially surround the pipe. The gripping mechanism may comprise a ball gripping mechanism wherein balls are held by a cage and are moved relative to the gripping device by the cage, and move up ramp formations in the gripping device thereby being urged into contact with the pipe. The gripper may support a damaged section of pipe, seal a pipe, or mount a flange, T-piece or valve to the pipe. WO 2011/072327 discloses a bolt comprising a threaded shaft, and a heating element for heating the shaft is disclosed along with a method for securing a first part and a second part of a pipeline system together with the bolt. The method includes the steps of: heating the bolt by heating the heating element; and securing the heated bolt to the first part and the second part of the pipeline system. Further known assemblies are disclosed in WO 2015/017544, EP 0241195 and US 3999782.

According to an aspect of the present invention, there is provided a pipe end connector assembly as defined in claim 1.

According to another aspect of the present invention, there is provided a method of mounting a pipe end connector assembly as defined in claim 12.

In some embodiments, the method includes compressing a primary seal between a primary ring and the first end plate to abut and seal with the outer surface of the pipe and the first connector body.

In some constructions, the first gripping segment defines a first passageway angled relative to a central axis of the first connector body and receiving a first ball, and the second gripping segment defines a second passageway angled relative to a central axis of the second connector body and receiving a second ball, the first passageway and the second passageway are angled in opposing directions. Moving a first end plate and a second end plate may cause the first passageway to urge the first ball into contact with the outer surface of the pipe, and moving a third end plate and a fourth end plate may cause the second passageway to urge the second ball into contact with the outer surface of the pipe. In some embodiments, the method may include biasing the first ball out of the first passageway; and biasing the second ball out of the second passageway.

In some embodiments, the method may include moving an annular first cage member from a blocking position, in which the first ball is inhibited from moving into contact with the outer surface of the pipe, to a release position, in which the first ball is movable into contact with the outer surface of the pipe; and moving an annular second cage member from a blocking position, in which the second ball is inhibited from moving into contact with the outer surface of the pipe, to a release position, in which the second ball is movable into contact with the outer surface of the pipe.

In some embodiments, the method may include swaging the outer surface of the pipe with the first ball and the second ball to form corresponding depressions in the outer surface, the first ball and the second balls engaging the depressions to provide a positive lock between the pipe and the first gripping segment and the second gripping segment, respectively.

Other features of the invention may become apparent by consideration of the following detailed description and accompanying drawings.

### BRIEF DESCRIPTION OF THE DRAWINGS

FIG. 1 is a perspective view of an exemplary pipe end connector assembly.
FIG. 2 is a cross-sectional perspective view of the connector assembly of FIG. 1 taken generally along line 2-2 in FIG. 1.
FIG. 3 is a cross-sectional perspective view of the connector assembly of FIG. 1 taken generally along line 3-3 in FIG. 1.
FIG. 4 is an enlarged cross-sectional view of a primary seal assembly and a secondary seal assembly of the connector assembly of FIG. 1.
FIGS. 4a-4b are enlarged cross-sectional schematic views of the seal assemblies of FIG. 4.
FIG. 5A is an enlarged cross-sectional view of a gripping element of the connector assembly of FIG. 1, shown disengaged from the example pipe
FIG. 5B is an enlarged cross-sectional view of the gripping element of FIG. 5A, shown engaged with the pipe.
FIGS. 6A-6C are enlarged views illustrating tear drop indents formed in the pipe by gripping elements.
FIG. 7 is a cross-sectional side view of another construction of a pipe end connector assembly.
FIG. 8 is an enlarged cross-sectional perspective view of the connector assembly of FIG. 7.
FIG. 9 is a cross-sectional perspective view of the connector assembly of FIG. 7, illustrating the connector assembly coupled to a pipe.
FIG. 10 is another cross-sectional perspective view of the connector assembly of FIG. 7, illustrating the connector assembly coupled to the pipe.
FIG. 11 is a perspective view of another alternative construction of a pipe end connector assembly.
FIG. 12 is a cross-sectional perspective view of the connector assembly of FIG. 11 taken generally along line 12-12 in FIG. 11.
FIG. 13 is a cross-sectional side view of the connector assembly of FIG. 11 taken generally along line 13-13 in FIG. 11.
FIG. 14A is an enlarged view of a primary seal of the connector assembly of FIG. 11, illustrating the seal prior to activation.
FIG. 14B is an enlarged view of the primary seal of FIG. 14A, illustrating the seal after activation.
FIG. 15 is a perspective view of yet another alternative construction of a pipe end connector assembly.
FIG. 16 is a cross-sectional view of the connector assembly of FIG. 15 taken generally along line 16-16 in FIG. 15.

### DETAILED DESCRIPTION

Before any independent embodiments of the invention are explained in detail, it is to be understood that the invention is not limited in its application to the details of construction and the arrangement of components set forth in the following description or illustrated in the following drawings. The invention is capable of other independent embodiments and of being practiced or of being carried out in various ways. Also, it is to be understood that the phraseology and terminology used herein is for the purpose of description and should not be regarded as limiting.

Use of "including" and "comprising" and variations thereof as used herein is meant to encompass the items listed thereafter as well as additional items. Use of "consisting of" and variations thereof as used herein is meant to encompass only the items listed thereafter.

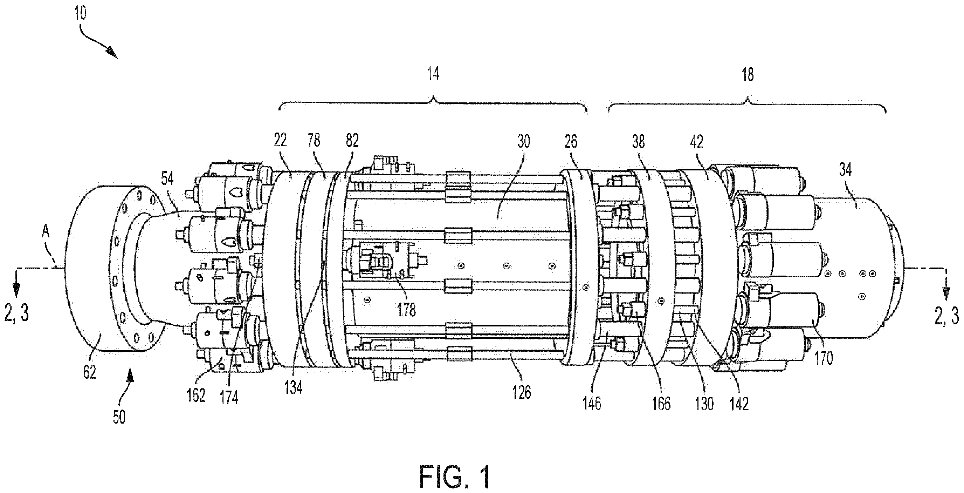

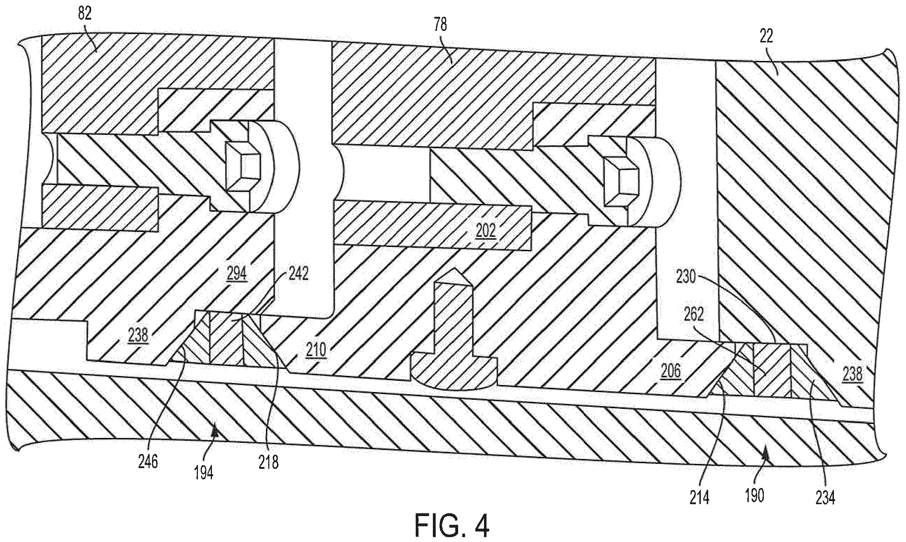

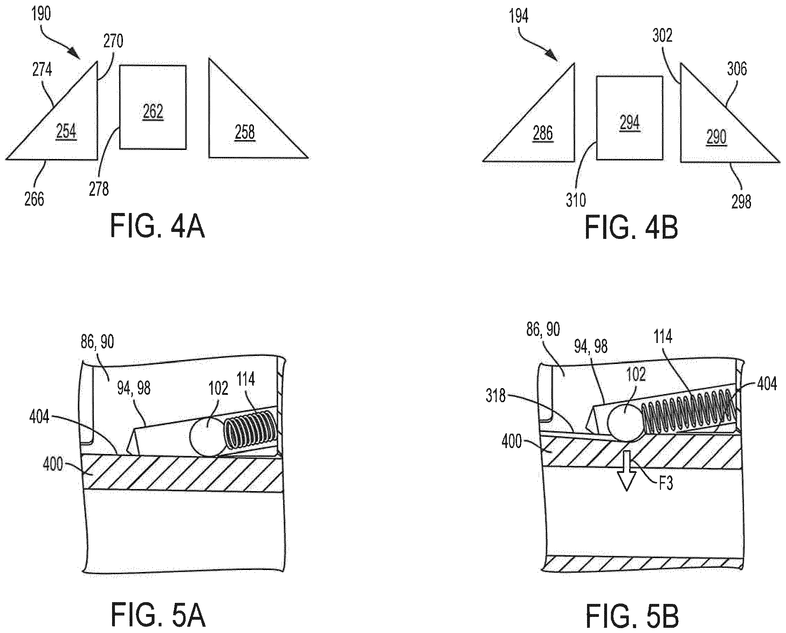

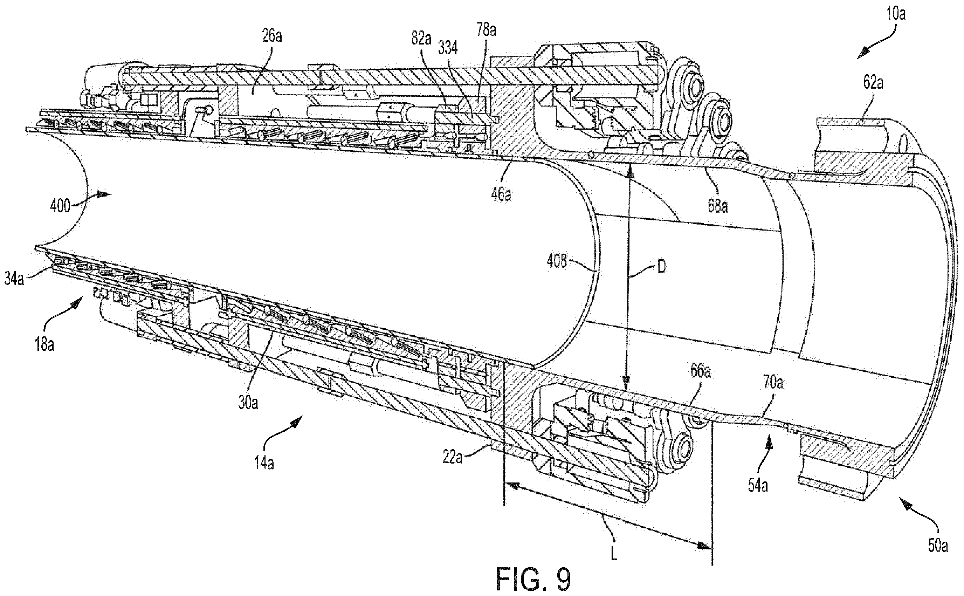

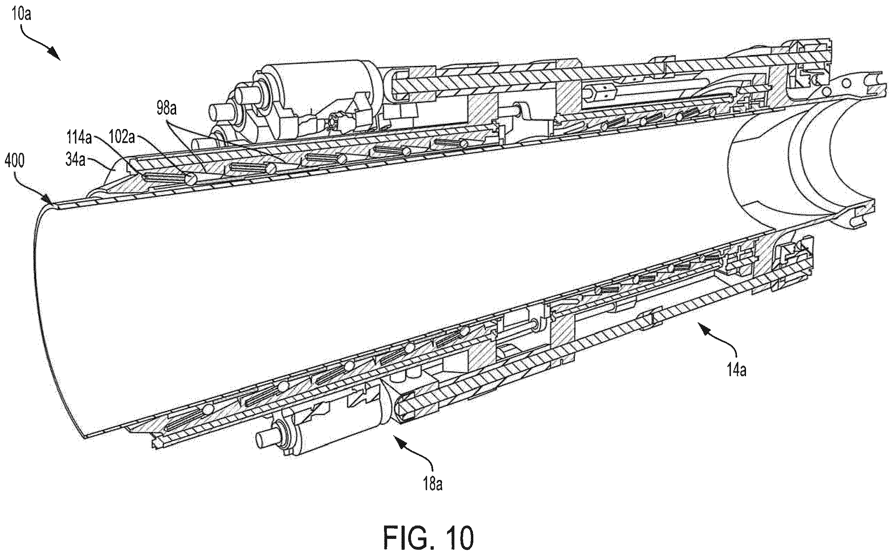

A pipe end connector assembly is illustrated in FIGS. 1-3. The connector assembly 10 is used for repairing a damaged section of a pipe and axially receives a cut end of a pipe (similar to the pipe 400, shown in FIGS. 4 and 9-10, having an outer surface 404 and a cut end 408). The illustrated connector assembly 10 does not require pipe end abutment with an abutment shoulder within the connector assembly 10 in order to grip the pipe.

The connector assembly 10 includes a first connector portion 14 (e.g., a tension connector portion) and a second connector portion 18 (e.g., a compression connector portion). The first connector portion 14 includes disc-shaped end plates 22, 26 positioned on opposite ends of a first cylindrical connector body 30. The second connector portion 18 includes a second cylindrical connector body 34 with disc-shaped end plates 38, 42 positioned on its opposite ends.

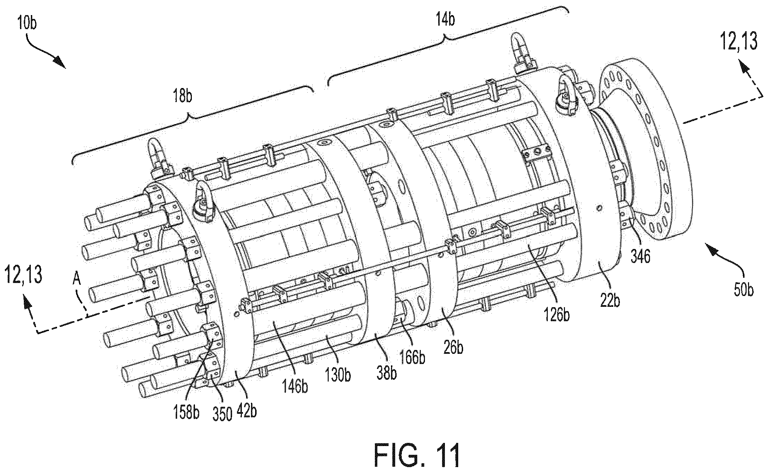

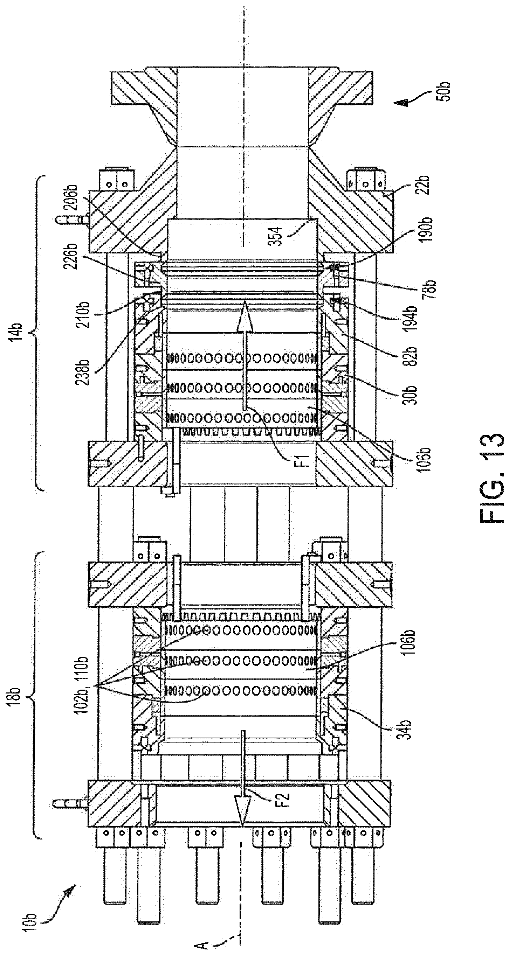

The first end plate 22 defines an opening 46 with a diameter D slightly larger than the outer diameter of the pipe being repaired to accommodate the pipe. The connector portions 14, 18 also have an interior diameter approximately equal to the diameter D of the opening 46 to accommodate the pipe. In the illustrated construction, the diameter D is approximately 1.18 m (44 inches). In other constructions (see FIGS. 11-13 and 15-16), the diameter D may be various sizes (e.g., approximately 0.86 m (34 inches), 1.07 m (42 inches), etc.) to accommodate pipes of various diameters.

A flange adaptor 50 is secured (e.g., welded) to the first end plate 22. The flange adaptor 50 includes a collar 54 welded at one end to an axial end face 58 of the first end plate 22 and, at the opposite end, a pipe flange 62. The collar 54 has a cylindrical portion 66 adjacent the first end plate 22 and a tapered portion 70 extending from the cylindrical portion 66 to the pipe flange 62. The cylindrical portion 66 has a diameter equal to the diameter D of the opening 46 of the first end plate 22. The cylindrical portion 66 of the collar 54 and the first end plate 22 define a passage 68 having an axial length L, in which a cut end of the pipe may be positioned before activating the connector assembly 10. The cut end of the pipe may be positioned anywhere along the axial length L of the passage 68. In the illustrated embodiment, the axial length L is approximately equal to the outer diameter of the pipe (i.e., the diameter D of the opening 46) but may be of any desired length.

As part of a repair procedure, the pipe flange 62 may be coupled (e.g., bolted) to a spool segment (not shown), which is a tube with pipe flanges on each end. The opposite end of the spool segment in turn may be coupled to another connector assembly (e.g., another connector assembly 10) secured to another cut end of a pipe of the original pipeline. While the connector assembly 10 is illustrated as a pipe-to-flange adaptor, it may alternatively be constructed as, for example, a pipe-to-pipe coupling, a pipe-to-weld adaptor, a pipe-to-blind end cap, or any other configuration required by a particular application.

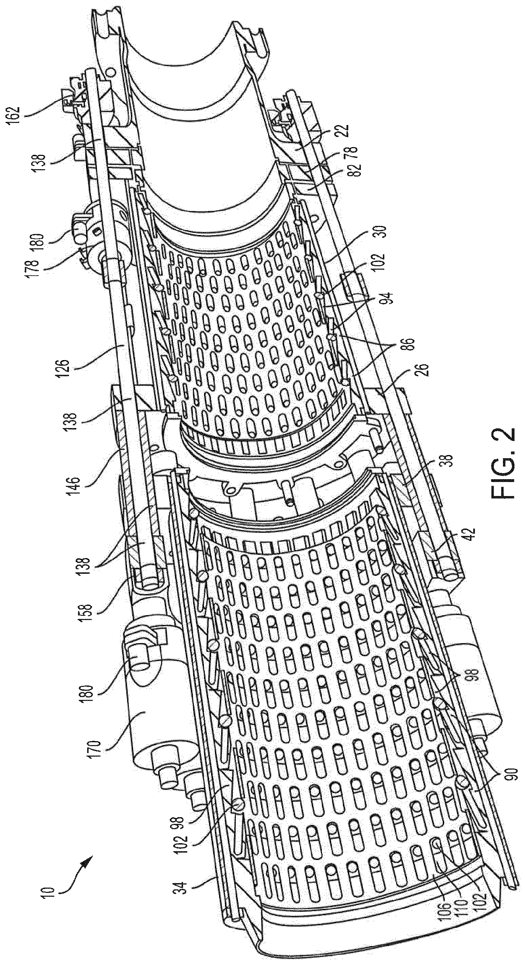

With reference to FIGS. 2-3, the first connector body 30 has a series of gripping segments 86, an annular primary ring 78 adjacent the first end plate 22, and an annular secondary ring 82 between the annular primary ring 78 and the series of gripping segments 86. The second connector body 34 has a series of gripping segments 90, equal to the number of the first connector body 30. In the illustrated embodiment, each of the connector bodies 30, 34 has ten gripping segments.

Each of the gripping segments 86, 90 of the connector bodies 30, 34 is generally ring-shaped and has a series of circumferentially spaced passageways 94, 98 skewed relative to the central axis A and extending from the inner surface of the gripping segments 86, 90. The passageways 94, 98 of the connector bodies 30, 34 are angled to face in opposite directions. Specifically, the passageways 94 of the first connector body 30 are angled to face away from the first end plate 22, and the passageways 98 of the second connector body 34 are angled to face toward the first end plate 22.

A ball 102 is positioned in each passageway 94, 98. Each connector body 30, 34 includes an annular cage 106 operable to restrain the balls 102 within the passageways 94, 98. Each annular cage 106 defines a series of circumferential openings 110, each of which corresponds to one of the balls 102 and into which each corresponding ball 102 is seated. A biasing member 114 (e.g., a spring) is seated in each passageway 94, 98 to urge the associated ball 102 toward its opening 110 in the cage 106 and toward an outer surface 404 of the pipe 400 (FIGS. 5A-5B).

Each cage 106 is movable between an initial position and an activated position. In the initial position, the cage 106 retains the balls 102 within the corresponding passageways 94, 98 of the connector bodies 30, 34 and against the bias of the biasing members 114. In the initial position, the balls 102 cannot extend out of the circumferential openings 110 to engage a pipe, so that the pipe can be inserted into the connector assembly 10.

In the activated position, the circumferential openings 110 are aligned with the passageways 94, 98, and the balls 102 are biased by the biasing members 114 down the passageways 94, 98 to extend out of the corresponding circumferential openings 110. In the activated position, the balls 102 are biased into contact with the outer surface of the pipe. In the illustrated construction, each cage 106 is moved to the activated position via a hydraulic ram.

The connector assembly 10 includes a plurality of first tension members 126 and a plurality of second tension members 130. Each of the end plates 22, 26, 38, 42 and each of the rings 78, 82 define circumferentially-spaced and axially-aligned first holes 138. The first holes 138 are adapted to receive one of the first tension members 126. Each of the third and fourth end plates 26, 42 also includes circumferentially-spaced and axially-aligned second holes 142. The second holes 142 are adapted to receive one of the second tension members 130.

For each of the first tension members 126, a bearing member 146 is positioned between the first hole 138 of the third end plate 38 and the first tension member 126 and extends between the second and fourth end plates 26, 42 such that the third end plate 38 can slide relative to the first tension members 126. The bearing member 146 connects the second and fourth end plates 26, 42 for concurrent axial movement.

In the illustrated embodiment, the connector assembly 10 includes a plurality of third tension members 134. Each of the first end plate 22 and the primary and secondary rings 78, 82 defines circumferentially-spaced and axially-aligned third holes (not shown). The third holes are adapted to receive one of the third tension members 134.

A first retaining nut 158 and a first tensioner 162 are engaged on opposite ends of each first tension member 126. The first tensioners 162 are actuatable (e.g., in a substantially synchronized and/or simultaneous manner) to create tension in the first tension members 126 to draw the second end plate 26 and the fourth end plate 42 toward the first end plate 22.

Similarly, a second retaining nut 166 and a second tensioner 170 are engaged on opposite ends of each second tension member 130. The second tensioners 170 are actuatable (e.g., in a substantially synchronized and/or simultaneous manner) to create tension in the second tension members 130 to draw the third end plate 38 toward the fourth end plate 42.

In operation, the first tensioners 162 and second tensioners 170 are actuated (e.g., in a substantially synchronized and/or simultaneous manner) so that the connector portions 14, 18 are axially compressed in opposing directions. As the first and second end plates 22, 26 are drawn toward each other and the third and fourth end plates 38, 42 are drawn toward each other, the corresponding gripping segments 86, 90 are axially compressed to cause the balls 102 to be wedged into the exterior surface of the pipe via the angled passageways 94, 98, providing a radially-inward gripping force to couple the connector assembly 10 to the pipe 400.

Due to the connector portions 14, 18 being compressed in opposite directions and the passageways 94, 98 facing in opposite directions, opposing outward axially forces F1, F2 are applied by the balls 102 on the pipe. The opposing axially forces, applied in a substantially synchronized and/or simultaneous manner, counteract and negate one another preventing the connector assembly 10 from sliding off or down the pipe.

In other constructions (not shown), the passageways 94, 98 may be angled away from each other in opposite directions to that described above, and the first and second connector portion 14, 18 may be compressed in opposite directions to that described above. In such constructions, opposing and negating inward axial forces would be applied by the balls 102 of the connector portions 14, 18 to the outer surface of the pipe, thereby allowing the balls 102 to be wedged into the outer surface of the pipe to mount the connector assembly 10 to the pipe 400.

In the illustrated construction, the connector assembly 10 further includes a third retaining nut 174 and a third tensioner 178 engaged on opposite ends of each third tension member 134. The third tensioners 178 are actuated (e.g., in a substantially synchronized and/or simultaneous manner) to draw the secondary ring 82 toward the primary ring 78, and the primary ring 78 toward the first end plate 22. The third tensioners 178 may be actuated separately from or in a substantially synchronized and/or simultaneous manner with the tensioners 162, 170.

The illustrated tensioners 162, 170, 178 are motorized but may be actuated in other ways, such as hydraulically. The illustrated tensioners 162, 170, 178 include connector points 180 into which an arm of a remotely operated vehicle (ROV) may stab to remotely control and actuate the tensioners 162, 170, 178. In other constructions (see FIGS. 11-13), the tensioners 162, 170, 178 may be replaced with threaded nuts, as described below.

Synchronized or simultaneous operation of each set tensioners 162, 170 or 178 and/or of multiple sets of tensioners (e.g., the tensioners 162 and 170) may be performed in any manner. For example, each tensioner 162, 170 or 178 may be operated independently while being controlled substantially synchronized or simultaneous by the operator(s). In another example, the structure used to operate the tensioners 162, 170, 178 (e.g., the ROV, a number of ROVs) may include a controller or control system operable to cause the tensioners 162, 170, 178 to be operated in a substantially synchronized and/or simultaneous manner.

In other constructions (not shown), structure to synchronize or cause simultaneous operation of the tensioners 162, 170, 178 may be provided. For example, a gear arrangement may be provided between a set of tensioners 162, 170 or 178 so that operation of one tensioner causes corresponding operation of the remaining tensioners.

In other constructions (not shown), structure may be provided to synchronize or cause simultaneous operation multiple sets of tensioners (e.g., the tensioners 162 and 170). For example, rather than sliding on the bearing 146, the third end plate 38 may be threaded to a supporting member replacing the bearing 146 having a thread pitch in a direction opposite to the first tension member 126. In such a construction, while the second end plate 26 and the fourth end plate 42 are drawn toward the first end plate 22, the third end plate 38 moves in the opposite direction toward the fourth end plate.

With reference to FIG. 4, a primary seal assembly 190 and a secondary seal assembly 194 are positioned, engaged, and energized to seal internal media from the external environment. The primary seal assembly 190 is positioned radially adjacent to the exterior surface of the pipe and axially between the primary ring 78 and the first end plate 22. The secondary seal assembly 194 is positioned radially adjacent to the exterior surface of the pipe and axially between the primary ring 78 and the secondary ring 82. As the first and second end plates 22, 26, are drawn together, the primary ring 78 and the secondary ring 82 translate axially toward each other such that both seal assemblies 190, 194 are compressed and activated. Spacer rings (not shown) may be positioned adjacent one or more of the primary ring 78 and the secondary ring 82 to reduce the occurrence of excessive ring translation and over-compression of any of the seals.

In the illustrated embodiment, the primary ring 78 has a generally inverted T-shaped cross section with a disk body 202, a radially inward primary finger 206 extending axially away from the disk body 202 toward the first end plate 22, and a secondary finger 210 extending axially away from the disk body 202 toward the secondary ring 82. Each finger 206, 210 has a beveled face 214, 218 at its distal end.

The first end plate 22 defines a primary annular undercut 226 formed by a radially inward face 230 and a beveled face 234 to house the primary seal assembly 190. The primary seal assembly 190 is configured to be compressed by the primary finger 206 within the primary annular undercut 226 in the first end plate 22 as the first and second end plates 22, 26 are drawn together.

Similarly, the secondary ring 82 defines a secondary annular undercut 238 formed by a radially inward face 242 and a beveled face 246 to house the secondary seal assembly 194. The secondary seal assembly 194 is configured to be compressed by the secondary finger 210 within the secondary annular undercut 238 in the secondary ring 82 as the first and second end plates 22, 26 are drawn together.

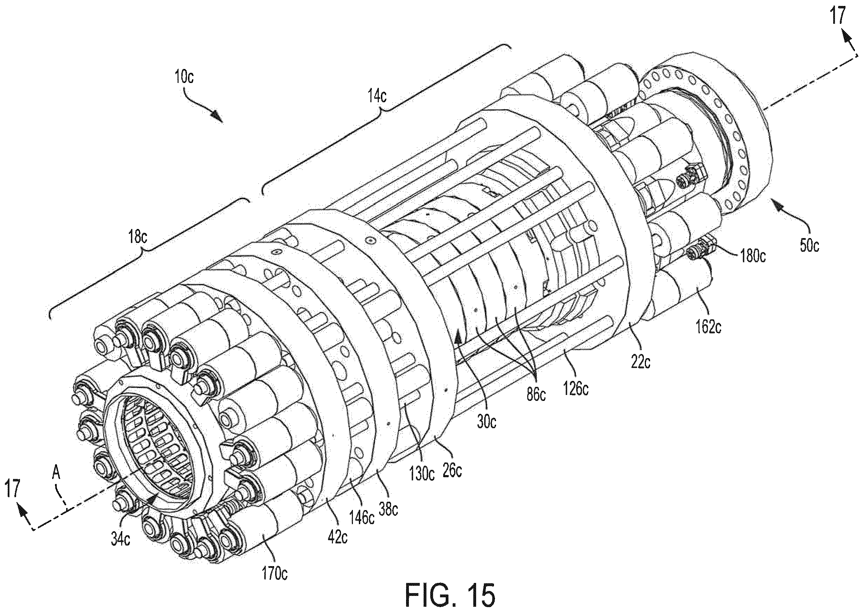

In alternate constructions (see FIGS. 11-14B), the primary finger 206 may extend axially from the first end plate 22 and the primary annular undercut 226 may be formed in the primary ring 78, as described below. In further alternate constructions (see FIGS. 15-16), the secondary finger 210 may extend axially from the secondary ring 82 and the secondary annular undercut 238 may be formed in the primary ring 78, as described below.

The primary seal assembly 190 includes a pair of anti-extrusion rings 254, 258 sandwiching a central primary seal member 262. Each anti-extrusion ring 254, 258 is preferably metallic and includes a split (not shown) to allow radial compression. The split may have opposing circumferential ends skewed relative to the central axis. Each anti-extrusion ring 254, 258 has a triangular cross-section with an interior surface 266 adjacent to the outer surface 404 of the pipe 400, a radial surface 270 generally slightly less than perpendicular (e.g., about 85 degrees) to the interior surface 266 and axially engaged with an axial face 278 of the primary seal member 262, and a hypotenuse surface 274 connecting the interior surface 266 and the radial surface 270.

With reference to FIG. 4a, with regard to the primary seal assembly 190, the hypotenuse surface 274 of the leftmost anti-extrusion ring 254 is contoured to engage and wedge against the beveled face 214 of the primary finger 206. The rightmost anti-extrusion ring 258 is engaged with the beveled face 234 of the primary annular undercut 226 in the first end plate 22. Therefore, the anti-extrusion rings 254, 258 compress the primary seal member 262 such that the primary seal member 262 flows radially between the outer surface 404 of the pipe 400 and the inward face 230 of the annular undercut 226 in the first end plate 22 to form a seal between the pipe 400 and the first end plate 22. The anti-extrusion rings 254, 258 keep the material of the primary seal member 262 where it can be compressed and hardened to establish the desired seal.

With reference to FIG. 4b, the secondary seal assembly 194 is constructed substantially identical to the primary seal assembly 190 as described above. The secondary seal assembly 194 includes a pair of split anti-extrusion rings 286, 290 sandwiching a central secondary seal member 294. Each anti-extrusion ring 286, 290 has a triangular cross section with an interior surface 298 adjacent to the exterior surface 404 of the pipe 400, a radial surface 302 generally slightly less than perpendicular to the interior surface 298 and axially engaged with an axial face 310 of the secondary seal member 294, and a hypotenuse surface 306 connecting the interior surface 298 and the radial surface 302.

In contrast to the primary seal assembly 190, with regard to the secondary seal assembly 194, the hypotenuse surface 306 of the rightmost anti-extrusion ring 290 is contoured to engage and wedge against the beveled face 218 of the secondary finger 210. The leftmost anti-extrusion ring 286 is engaged with the beveled face 246 of the annular undercut 238 in the secondary ring 82. Therefore, the anti-extrusion rings 286, 290 compress the secondary seal member 294 such that the secondary seal member 294 flows radially between the outer surface 404 of the pipe 400 and the inward face 242 of the secondary annular undercut 238 in the secondary ring 82.

The seal members 262, 294 are made of a malleable and compressible material, such as exfoliated graphite. In one form, the seal members 262, 294 is made of approximately 98% pure exfoliated graphite that is a laminate graphite sheet or ribbon spun or spiral wound around a mandrel into a mold that can be subsequently manipulated into the installed form factor.

The connector assembly 10 may include a series of ports at various locations to pressure test the various seal boundaries established by the seal assemblies 190, 194. A first port can be pressurized to confirm the integrity of the primary seal assembly 190 and the secondary seal assembly 194. A second port can be pressurized to confirm the integrity of the primary seal assembly 190.

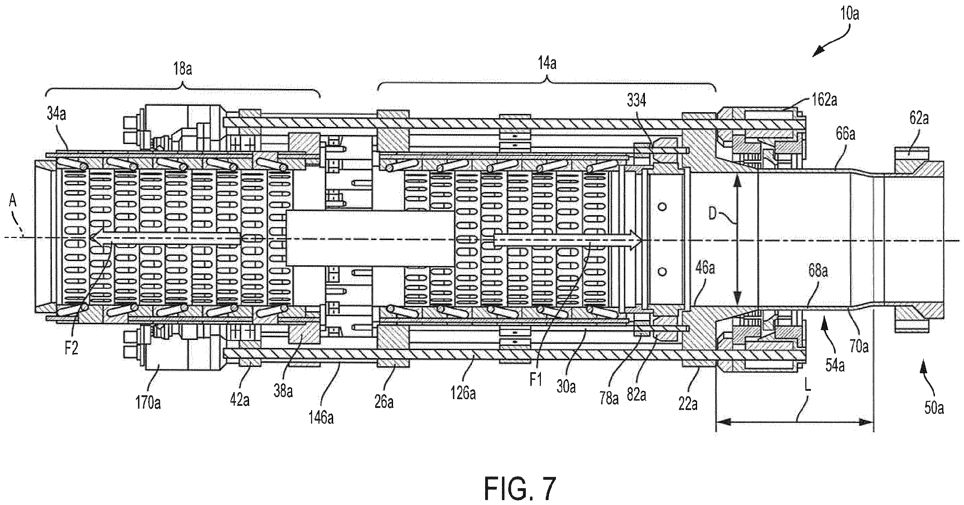

The first and third tension members 126, 134 extend through the primary ring 78, the secondary ring 82, and the first end plate 22 to ensure the appropriate relative rotational position between adjacent components such that, for example, the port passageways are properly aligned. In alternate embodiments (see FIGS. 7 and 9-10), one or more dowel pins 334 can be used to ensure the appropriate relative rotational position between the adjacent components.

In operation, after the pipe 400 has been cut, the connector assembly 10 is slid over the cut end 408 and positioned adjacent to an axial end face of the cut end 408 of the pipe 400. The cut end 408 of the pipe 400 is positioned along the length L within the collar 54 of the pipe flange adaptor 50. The connector assembly 10 is then coupled to the pipe 14 in a somewhat similar manner to that used by a typical MORGRIP® device.

Specifically, once the connector assembly 10 is positioned such that the pipe 400 is within the collar 54, the cages 106 are moved to the activated position (e.g., via the hydraulic rams). When the cages 106 are in the activated position, the balls 102 are biased by the biasing members 114 down the angled passageways 94, 98 out the circumferential openings 110 and into contact with the exterior surface of the pipe (FIG. 5A).

Actuating the first tensioners 162 causes the first tension members 126 to draw the second end plate 26 and the fourth end plate 42 axially toward the first end plate 22 along the first tension members 126. Actuating the second tensioners 170 causes the second tension members 130 to draw the third end plate 38 axially toward the fourth end plate 42 along the second tension members 130. As the first and second end plates 22, 26 are brought together and the third and fourth end plates 38, 42 are brought together, the first connector body 30 applies a first axial force F1 on the outer surface of the pipe, and the second connector body 34 applies a second axial force F2 on the outer surface of the pipe.

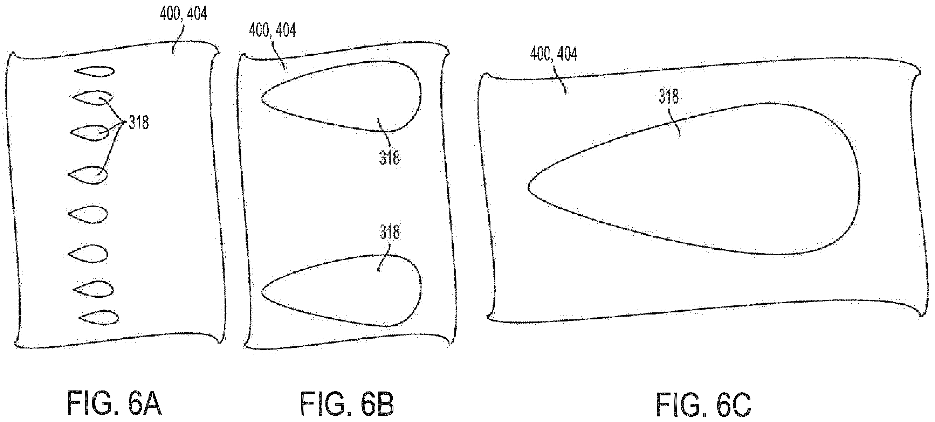

As the balls 102 are wedged into contact with the outer surface 404 of the pipe 400, the balls 102 swage the outer surface 404 of the pipe 400 to form tear drop shaped depressions 318 in the outer surface 404 (see FIGS. 6A-6C). The balls 102 apply a radially inward force F3 to the pipe 400. The balls 102 engage the tear drop shaped depressions 318 to, for example, provide a positive lock so that the connection cannot work loose, to increase gripping strength, etc. The tear drop shaped depressions 318 may also prevent torsional movement of the connector assembly 10, minimize the amount of stress applied to the pipe 400 by the balls 102 (i.e., the depressions 318 are non-stress raisers), etc. Adjusting the number of gripping segments 86, 90 and/or balls 102 per gripping segment 86, 90 will adjust the gripping capacity.

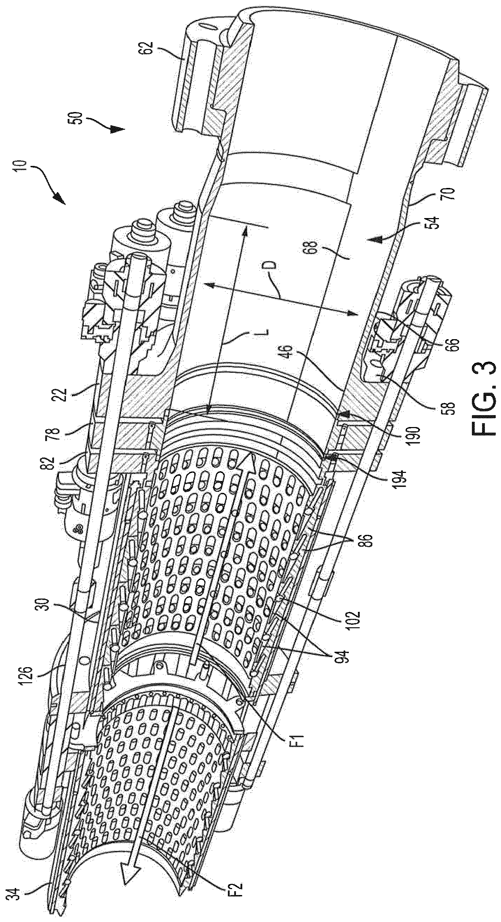

In the illustrated construction, the second axial force F2 is equal and opposite to the first axial force F1 (see FIG. 3). Actuating the first and second tensioners 162, 170 simultaneously causes the axial forces F1, F2 to negate. Due to the negation of the axial forces F1, F2, the connector assembly 10 does not move axially along the pipe 400 as the connector portions 14, 18 are activated.

By providing the connector bodies 30, 34 that provide opposing reaction forces F1, F2, the connector assembly 10 is able to be coupled anywhere along the length of the pipe 400. Accordingly, the cut end 408 may be positioned anywhere along the length L within the passage 68, thus reducing the precision necessary when cutting the pipe 400. In contrast, in some existing connector assemblies (not shown), increased precision is required when cutting the pipe in order to precisely align the cut end 404 with an abutment shoulder of the existing connector assembly.

As the first and second plates 22, 26 are brought together, the primary ring 78 and the secondary ring 82 move axially and are compressed together between the first connector body 30 and the first end plate 22 to drive activation of the primary seal assembly 190 and the secondary seal assembly 194, which engage the exterior surface the pipe 400 and form a fluid seal between the interior of the pipe 400 and the interior of the flange adaptor 50.

If the seal assemblies 190, 194 are fully activated through activation of the tensioners 162, it may not be necessary to activate the third tensioners 178. However, if necessary, the third tensioners 178 are activated to manipulate the third tension members 134 to draw the secondary ring 82 toward the primary ring 78, and the primary ring 78 toward the first end plate 22 in order to provide additional force to ensure full activation of the primary and secondary seal assemblies 190, 194. The dynamic installation and engagement of the primary and secondary seal assemblies 190, 194 is similar to that used by a typical MORGRIP® device and is described in more detail below. The third tensioners 178 may be activated after the first and second tensioners 162, 170 if additional force is necessary to fully activate the seal assemblies 190, 194. Alternatively, the third tensioners 178 may be activated simultaneously with the first and second tensioners 162, 170 to provide additional force to ensure full activation of the seal assemblies 190, 194.

Specifically, the primary ring 78 and the secondary ring 82 are moved axially (e.g., rightwardly in FIG. 3) by the first connector body 30 causing the primary seal assembly 190 and the secondary seal assembly 194 to be partially compressed. In particular, with regard to the primary seal assembly 190, the left anti-extrusion ring 254 is wedged against the primary finger 206 of the primary ring 78, and the right anti-extrusion ring 258 is wedged against the beveled face 234 of the first end plate 22. The anti-extrusion rings 254, 258 are urged radially inward and radially compressed as the primary seal member 190 is axially compressed.

Similarly, with regard to the secondary seal assembly 194, the right anti-extrusion ring 290 is wedged against the secondary finger 210 of the primary ring 78, and the left anti-extrusion ring 286 is wedged against the beveled face 246 of the secondary ring 82. The anti-extrusion rings 286, 290 are urged radially inward and radially compressed as the secondary seal member 294 is axially compressed. Each of the primary seal member 262 and the secondary seal member 294 is allowed to expand radially outward and inward to fill voids and engage the outer surface 404 of the pipe 400.

The secondary ring 82 is moved further axially (e.g., rightwardly in FIG. 3) to abut the primary ring 78. Similarly, the primary ring 78 is moved further axially (e.g., rightwardly in FIG. 3) to abut the first end plate 22. The movement results in the primary seal assembly 190 and the secondary seal assembly 194 each being fully compressed. The malleable, exfoliated graphite primary and secondary seal members 262, 294 are compressed to increase the effective density of the primary and secondary seal members 262, 294 to form a seal that inhibits the passage of medium from the pipe to the external environment.

Once the seal assemblies 190, 194 are activated, the integrity of the seal assemblies 190, 194 is tested. If further activation is required, the tensioners (e.g., the third tensioners 178) may be activated to provide additional force to ensure full activation of the primary and secondary seal assemblies 190, 194.

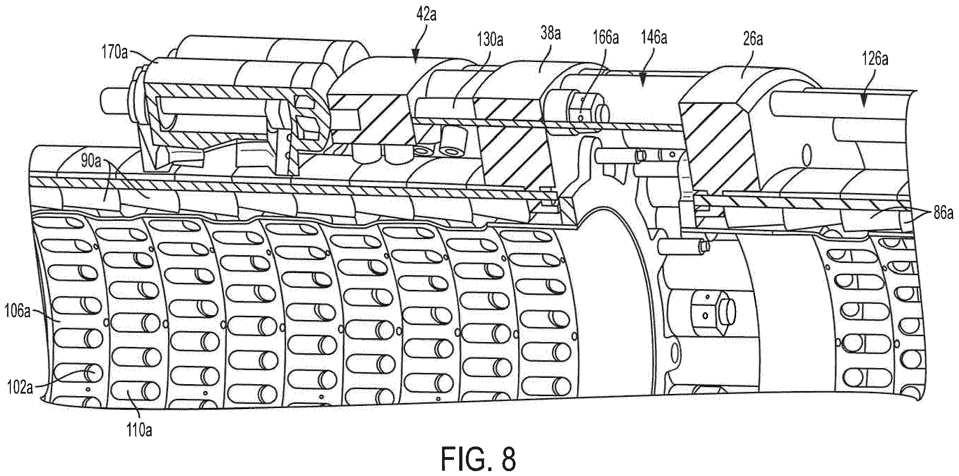

FIGS. 7-10 illustrate an alternative construction of a pipe end connector assembly 10a. The connector assembly 10a and its components are similar to the connector assembly 10 and components shown in FIGS. 1-6 and described above. Common components have the same reference number "a". The connector assembly 10a is assembled and operated in a similar fashion as the connector assembly 10.

The connector assembly 10a includes one or more dowel pins 334 extending through the primary ring 78a, the secondary ring 82a, and into the first end plate 22a to ensure the relative rotational position between the primary ring 78a, the secondary ring 82a, and the first end plate, for example, so that the port passageways are properly aligned. The dowel pins 334 are included in lieu of third tension members (similar to the third tension members 134) extending through the primary ring 78a, the secondary ring 82a, and the first end plate 22a. In the illustrated construction, the seal assemblies 190a, 194a are fully activated by activation of the first tensioners 162a.

FIGS. 11-14B illustrate another alternative construction of a pipe end connector assembly 10b. The connector assembly 10b and its components are similar to the connector assembly 10, 10a and components shown in FIGS. 1-10 and described above. Common components have the same reference number "b". The connector assembly 10a is assembled and operated in a similar fashion as the connector assembly 10, 10a. The illustrated connector assembly 10b has an interior diameter D configured to accommodate pipes with diameters of approximately 16 inches.

With reference to FIG. 11, the connector assembly 10b includes first tensioner nuts 346 and second tensioner nuts 350 threadingly engaged onto the first tension members 126b and the second tension members 130b, respectively, in place of the tensioners 162, 170. The first tensioner nuts 346 are rotated to draw the second and fourth end plates 26b, 42b axially toward the first end plate 22. The second tensioner nuts 350 are rotated so as to draw the third end plate 38b axially toward the fourth end plate 42b. Similar to the connector assembly 10, as the first and second tensioner nuts 346, 350 are rotated simultaneously, the balls 102b engage the pipe so as to provide opposing and offsetting axial forces to mount the connector assembly 10b to the pipe.

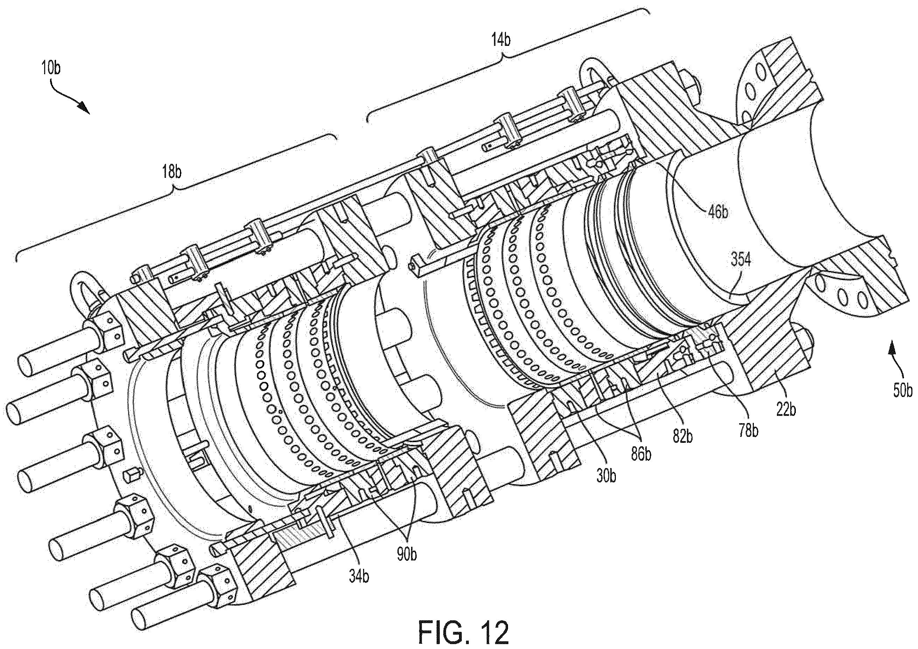

With reference to FIGS. 12-13, the first end plate 22b has an abutment shoulder 354 extending inward from the opening 46b in the first end plate 22b that a pipe end may abut when fully inserted into the connector assembly 10b. The abutment shoulder 354 may be eliminated from the opening 46b, such that the opening 46b in the first end plate 22b may have a diameter D that extends through the first end plate 22b and the flange adaptor 50b. Accordingly, a cut end of a pipe may be positioned anywhere along the axial length L. In the illustrated construction, each of the connector bodies 30b, 34b includes three griping segments 86b, 90b.

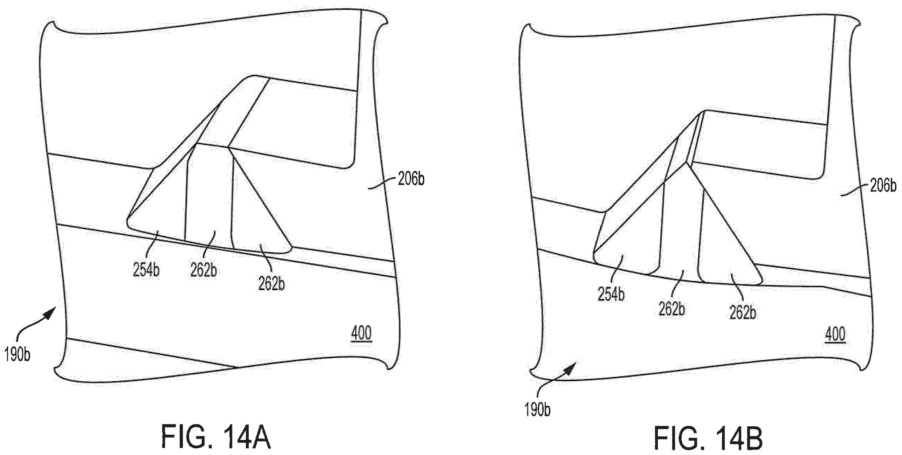

The primary finger 206b extends from the first end plate 22b and the primary annular undercut 226b is formed in the primary ring 78b. The secondary finger 210b extends from the primary ring 78b and the secondary annular undercut 238b is formed in the secondary ring 82b. FIG. 14A illustrates the secondary seal assembly 194b prior to activation. FIG. 14B illustrates the secondary seal assembly 194b after activation. Once the secondary seal assembly 194b is activated, the seal member 194b is compressed by the anti-extrusion rings 286b, 290b.

FIGS. 15-16 illustrate yet another alternative construction of a pipe end connector assembly 10c. The connector assembly 10c and its components are similar to the connector assembly 10, 10a, 10b and components shown in FIGS. 1-14B and described above. Common components have the same reference number "c". The connector assembly 10c is assembled and operated in a similar fashion as the connector assembly 10, 10a, 10b. The illustrated connector assembly 10c has an interior diameter D configured to accommodate pipes with diameters of approximately 34 inches.

With reference to FIG. 15, each of the connector bodies 30c, 34c includes six gripping segments 86c, 90c. Accordingly, each of the connector bodies 30c, 34c are shorter in length than the connector bodies 30, 34 of the pipe end connector assembly 10.

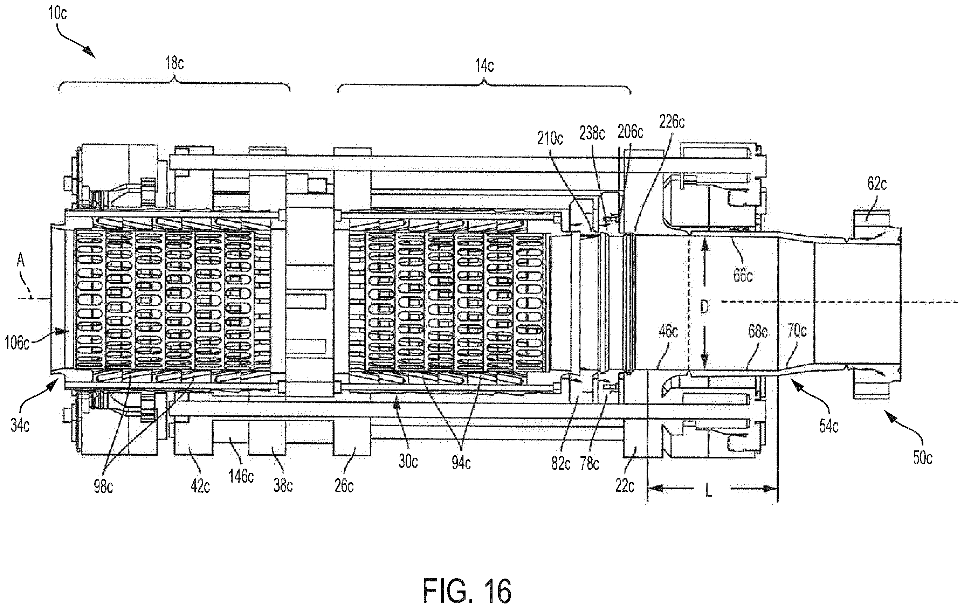

With reference to FIG. 16, the primary finger 206c extends from the primary ring 78c and the primary annular undercut 226c is formed in the first end plate 22c. The secondary finger 210c extends from the secondary ring 82c and the secondary undercut 238c is formed in the primary ring 78c. The primary and secondary seal assemblies are not shown.

In general, a pipe end connector assembly may include a connector bodies activated (e.g., compressed) to apply to a pipe opposing axially forces that negate to prevent axial movement of the connector assembly on the pipe, such that a radially force applied by the connector bodies can grip the pipe without requiring a pipe end abutment surface.

## Claims

1. A pipe end connector assembly configured to mount to an outer surface of a pipe proximate an axial end face of the pipe, the connector assembly comprising:
a first connector (14) configured to selectively mount to the outer surface of the pipe, wherein the first connector includes a cylindrical first connector body (30) having a first gripping segment (86) configured to selectively mount to the outer surface of the pipe;
a first end plate (22) and a second end plate (26) positioned at opposite ends of the first connector body;
a second connector (18) connected to the first connector and configured to selectively mount to the outer surface of the pipe, wherein the second connector includes a cylindrical second connector body (34) having a second gripping segment (90) configured to selectively mount to the outer surface of the pipe; and
a third end plate (38) and a fourth end plate (42) positioned at opposite ends of the second connector body;
the first connector and the second connector being operable to apply opposing and negating axial forces to mount the connector assembly to the pipe;
wherein the pipe end connector assembly further comprises: a first tension member (126) coupled to the first end plate, the second end plate and the fourth end plate and being manipulatable to draw the first end plate and the second end plate toward each other such that the first gripping segment engages the outer surface of the pipe,_manipulation of the first tension member drawing the first end plate and the fourth end plate toward each other; and
a second tension member (130) coupled to the third end plate and the fourth end plate, the second tension member being manipulatable to draw the third end plate and the fourth end plate toward each other such that the second gripping segment engages the outer surface of the pipe;
wherein the second end plate (26) and the third end plate (38) are moveable in opposite directions when the first and second tension members (126, 130) are tensioned and manipulated in the way described above.

2. The connector assembly of claim 1, wherein the first tension member and the second tension member are substantially simultaneously manipulatable to provide negating axial forces to mount the connector assembly to the pipe.

3. The connector assembly of claim 1, further comprising a primary seal (190) engaged with the first connector body and positioned adjacent the first end plate.

4. The connector assembly of claim 3, further comprising:
a primary ring (78), the primary seal being positioned between the primary ring and the first end plate; and
a third tension member (134) manipulatable to cause the primary ring and the first end plate to compress the primary seal to abut and seal with the outer surface of the pipe and the first connector body.

5. The connector assembly of claim 1, further comprising:
a first tensioner (162) corresponding to the first tensioner member, the first tensioner being actuatable to manipulate the first tension member; and
a second tensioner (170) corresponding to the second tension member, the second tensioner being actuatable to manipulate the second tension member.

6. The connector assembly of claim 5, wherein the first tensioner and the second tensioner each include connector points (180) engageable by a remotely-operated vehicle to remotely actuate the first tensioner and the second tensioner.

7. The connector assembly of claim 1, further comprising a collar (54) extending from the first end plate, the first end plate and the collar defining a cylindrical passage (68) configured to receive the pipe, the passage having a length (L) at least approximately equal to an outer diameter of the pipe, the axial end face of the pipe being positionable along the length of the passage.

8. The connector assembly of claim 7, further comprising a pipe flange adaptor (50) extending from the collar for coupling the connector assembly to a pipe flange.

9. The connector assembly of claim 1, wherein the first gripping segment defines a first passageway (94) angled relative to a central axis of the first connector body and receiving a first ball (102), the first passageway being configured to urge the first ball into contact with the outer surface of the pipe as the first end plate and the second end plate are drawn toward each other, wherein the second gripping segment defines a second passageway (98) angled relative to a central axis of the second connector body and receiving a second ball (102), the second passageway being configured to urge the second ball into contact with the outer surface of the pipe when the third end plate and the fourth plate are drawn toward each other, and wherein the first passageway and the second passageway are angled in opposing directions.

10. The connector assembly of claim 9, wherein a biasing member (114) is positioned within each of the first passageway and the second passageway to bias the first ball and the second ball out of the first passageway and the second passageway, respectively.

11. The connector assembly of claim 10, further comprising:
an annular first cage member (106) positioned adjacent the first gripping segment, the first cage member defining an opening (110) corresponding to the first passageway, the first annular cage member being movable between a blocking position, in which the first annular cage member inhibits the first ball from being biased into contact with the outer surface of the pipe, and a release position, in which the first ball partially extends through the opening and into contact with the outer surface of the pipe; and
an annular second cage member (106) positioned adjacent the second gripping segment, the second cage member defining an opening (110) corresponding to the second passageway, the second annular cage member being movable between a blocking position, in which the second annular cage member inhibits the second ball from being biased into contact with the outer surface of the pipe, and a release position, in which the second ball partially extends through the opening and into contact with the outer surface of the pipe.

12. A method of mounting a pipe end connector assembly to an outer surface of a pipe proximate an axial end face of the pipe, the method comprising:
positioning the pipe in a first connector (14) having a first connector body (30) including a first gripping segment (86) configured to selectively mount to the outer surface of the pipe and in a second connector (18) connected to the first connector and having a second connector body (34) including a second gripping segment (90) configured to selectively mount to the outer surface of the pipe; and
operating the first connector and the second connector to apply opposing and negating axial forces to mount the connector assembly to the pipe, wherein operating includes:
with a first tension member (126), moving a first end plate (22) and a second end plate (26) positioned at opposite ends of the first connector body toward each other such that the first gripping segment applies to the pipe a first axial force in a first direction;
with a second tension member (130), moving a third end plate (38) and a fourth end plate (42) positioned at opposite ends of the second connector body toward each other such that the second gripping segment applies to the pipe a second axial force in a second direction opposite the first direction, the second axial force cancelling the first axial force; and.
with the first tension member, moving the first end plate and the fourth end plate toward each other;
wherein moving the third end plate(38) includes moving the third end plate (38) in an opposite direction from the second end plate (26) when the first and second tension members (126, 130) are tensioned and manipulated in the way described above.

13. The method of claim 12, wherein the first gripping segment defines a first passageway (94) angled relative to a central axis of the first connector body and receiving a first ball (102), wherein the second gripping segment defines a second passageway (98) angled relative to a central axis of the second connector body and receiving a second ball (102), wherein the first passageway and the second passageway are angled in opposing directions, wherein moving the first end plate and the second end plate causes the first passageway to urge the first ball into contact with the outer surface of the pipe, and wherein moving the third end plate and the fourth end plate causes the second passageway to urge the second ball into contact with the outer surface of the pipe.

14. The method of claim 13, further comprising:
biasing the first ball out of the first passageway; and
biasing the second ball out of the second passageway.

15. The method of claim 13, further comprising:
moving an annular first cage member (106) from a blocking position, in which the first ball is inhibited from moving into contact with the outer surface of the pipe, to a release position, in which the first ball is movable into contact with the outer surface of the pipe; and
moving an annular second cage member (106) from a blocking position, in which the second ball is inhibited from moving into contact with the outer surface of the pipe, to a release position, in which the second ball is movable into contact with the outer surface of the pipe.

## Patentansprüche

1. Rohrendenverbinderanordnung, die zum Befestigen an einer Außenfläche eines Rohres in der Nähe einer axialen Endfläche des Rohres eingerichtet ist, wobei die Verbinderanordnung umfasst:
einen ersten Verbinder (14), der eingerichtet ist, um selektiv an der Außenfläche des Rohres befestigt zu werden, wobei der erste Verbinder einen zylindrischen ersten Verbinderkörper (30) mit einem ersten Greifsegment (86) beinhaltet, welches eingerichtet ist, um selektiv an der Außenfläche des Rohres befestigt zu werden;
eine erste Endplatte (22) und eine zweite Endplatte (26), die an gegenüberliegenden Enden des ersten Verbinderkörpers angeordnet sind;
einen zweiten Verbinder (18), der mit dem ersten Verbinder verbunden ist und eingerichtet ist, um selektiv an der Außenfläche des Rohres befestigt zu werden, wobei der zweite Verbinder einen zylindrischen zweiten Verbinderkörper (34) mit einem zweiten Greifsegment (90) aufweist, welches eingerichtet ist, um selektiv an der Außenfläche des Rohres befestigt zu werden; und
eine dritte Endplatte (38) und eine vierte Endplatte (42), die an gegenüberliegenden Enden des zweiten Verbinderkörpers angeordnet sind;
wobei der erste Verbinder und der zweite Verbinder betätigbar sind, um entgegengesetzte und negierende Axialkräfte aufzubringen, um die Verbinderanordnung an dem Rohr zu befestigen;
wobei die Rohrendenverbinderanordnung weiter umfasst:
ein erstes Spannelement (126), welches mit der ersten Endplatte, der zweiten Endplatte und der vierten Endplatte gekoppelt ist und bedienbar ist, um die erste Endplatte und die zweite Endplatte aufeinander zu zu ziehen, so dass das erste Greifsegment in die Außenfläche des Rohres eingreift, wobei eine Bedienung des ersten Spannelements die erste Endplatte und die vierte Endplatte aufeinander zu zieht; und
ein zweites Spannelement (130), welches mit der dritten Endplatte und der vierten Endplatte gekoppelt ist, wobei das zweite Spannelement bedienbar ist, um die dritte Endplatte und die vierte Endplatte so aufeinander zu zu ziehen, dass das zweite Greifsegment in die Außenfläche des Rohres eingreift;
wobei die zweite Endplatte (26) und die dritte Endplatte (38) in entgegengesetzte Richtungen beweglich sind, wenn das erste und zweite Spannelement (126, 130) gespannt und in der vorstehend beschriebenen Weise bedient werden.

2. Verbinderanordnung nach Anspruch 1, wobei das erste Spannelement und das zweite Spannelement im Wesentlichen gleichzeitig bedienbar sind, um negierende Axialkräfte bereitzustellen, um die Verbinderanordnung an dem Rohr zu befestigen.

3. Die Verbinderanordnung nach Anspruch 1, weiter umfassend eine Primärdichtung (190), die mit dem ersten Verbinderkörper in Eingriff steht und angrenzend an die erste Endplatte angeordnet ist.

4. Die Verbinderanordnung nach Anspruch 3, weiter umfassend:
einen Primärring (78), wobei die Primärdichtung zwischen dem Primärring und der ersten Endplatte angeordnet ist; und
ein drittes Spannelement (134), das bedienbar ist, um zu bewirken, dass der Primärring und die erste Endplatte die Primärdichtung zusammendrücken, um an der Außenfläche des Rohres und dem ersten Verbinderkörper anzuliegen und mit dieser abzudichten.

5. Die Verbinderanordnung nach Anspruch 1, weiter umfassend:
einen ersten Spanner (162), der zum ersten Spannelement gehört, wobei der erste Spanner betätigbar ist, um das erste Spannelement zu bedienen; und
einen zweiten Spanner (170), der zum zweiten Spannelement gehört, wobei der zweite Spanner betätigbar ist, um das zweite Spannelement zu bedienen.

6. Verbinderanordnung nach Anspruch 5, wobei der erste Spanner und der zweite Spanner jeweils Verbindungspunkte (180) aufweisen, die von einem ferngesteuerten Fahrzeug in Eingriff gebracht werden können, um den ersten Spanner und den zweiten Spanner aus der Entfernung zu betätigen.

7. Verbinderanordnung nach Anspruch 1, weiter umfassend einen Kragen (54), der sich von der ersten Endplatte erstreckt, wobei die erste Endplatte und der Kragen einen zylindrischen Durchgang (68) definieren, der zur Aufnahme des Rohres eingerichtet ist, wobei der Durchgang eine Länge (L) aufweist, die mindestens annähernd gleich einem Außendurchmesser des Rohres ist, wobei die axiale Endfläche des Rohres entlang der Länge des Durchgangs positionierbar ist.

8. Verbinderanordnung nach Anspruch 7, ferner umfassend einen Rohrflanschadapter (50), der sich von dem Kragen erstreckt, um die Verbinderanordnung mit einem Rohrflansch zu verbinden.

9. Verbinderanordnung nach Anspruch 1, wobei das erste Greifsegment einen ersten Durchgang (94) definiert, der in Bezug auf eine Mittelachse des ersten Verbinderkörpers abgewinkelt ist und eine erste Kugel (102) aufnimmt, wobei der erste Durchgang eingerichtet ist, die erste Kugel in Kontakt mit der Außenfläche des Rohres zu drängen, wenn die erste Endplatte und die zweite Endplatte aufeinander zu gezogen werden, wobei das zweite Greifsegment einen zweiten Durchgang (98) definiert, der in Bezug auf eine Mittelachse des zweiten Verbinderkörpers abgewinkelt ist und eine zweite Kugel (102) aufnimmt, wobei der zweite Durchgang eingerichtet ist, die zweite Kugel in Kontakt mit der Außenfläche des Rohres zu drängen, wenn die dritte Endplatte und die vierte Platte aufeinander zu gezogen werden, und wobei der erste Durchgang und der zweite Durchgang in entgegengesetzte Richtungen abgewinkelt sind.

10. Verbinderanordnung nach Anspruch 9, wobei ein Vorspannelement (114) innerhalb jedes des ersten Durchgangs und des zweiten Durchganges positioniert ist, um die erste Kugel und die zweite Kugel aus dem ersten Durchgang bzw. dem zweiten Durchgang heraus vorzuspannen.

11. Verbinderanordnung nach Anspruch 10, weiter umfassend:
ein ringförmiges erstes Käfigelement (106), das angrenzend an das erste Greifsegment angeordnet ist, wobei das erste Käfigelement eine dem ersten Durchgang entsprechende Öffnung (110) definiert, wobei das erste ringförmige Käfigelement zwischen einer Blockierstellung, in der das erste ringförmige Käfigelement verhindert, dass die erste Kugel in Kontakt mit der Außenfläche des Rohres vorgespannt wird, und einer Freigabestellung, in der sich die erste Kugel teilweise durch die Öffnung erstreckt und in Kontakt mit der Außenfläche des Rohres ist, beweglich ist; und
ein ringförmiges zweites Käfigelement (106), das angrenzend an das zweite Greifsegment angeordnet ist, wobei das zweite Käfigelement eine dem zweiten Durchgang entsprechende Öffnung (110) definiert, wobei das zweite ringförmige Käfigelement zwischen einer Blockierstellung, in der das zweite ringförmige Käfigelement verhindert, dass die zweite Kugel in Kontakt mit der Außenfläche des Rohres vorgespannt wird, und einer Freigabestellung, in der sich die zweite Kugel teilweise durch die Öffnung erstreckt und in Kontakt mit der Außenfläche des Rohres ist, beweglich ist.

12. Verfahren zum Befestigen einer Rohrendenverbinderanordnung an einer Außenfläche eines Rohres in der Nähe einer axialen Endfläche des Rohres, wobei das Verfahren umfasst:
Anordnen des Rohres in einem ersten Verbinder (14) mit einem ersten Verbinderkörper (30), der ein erstes Greifsegment (86) beinhaltet, das eingereichtet ist, um selektiv an der Außenfläche des Rohres befestigt zu werden, und in einem zweiten Verbinder (18), der mit dem ersten Verbinder verbunden ist und einen zweiten Verbinderkörper (34) aufweist, der ein zweites Greifsegment (90) beinhaltet, das eingerichtet ist, um selektiv an der Außenfläche des Rohres befestigt zu werden; und
Betätigen des ersten Verbinders und des zweiten Verbinders zum Aufbringen entgegengesetzter und negierender Axialkräfte zum Befestigen der Verbinderanordnung an dem Rohr, wobei das Betätigen Folgendes beinhaltet:
aufeinander zu Bewegen einer ersten Endplatte (22) und einer zweite Endplatte (26), die an gegenüberliegenden Enden des ersten Verbinderkörpers angeordnet sind, mit einem ersten Spannelement (126), so dass das erste Greifsegment eine erste Axialkraft in einer ersten Richtung auf das Rohr aufbringt;
aufeinander zu Bewegen einer dritten Endplatte (38) und einer vierten Endplatte (42), die an gegenüberliegenden Enden des zweiten Verbinderkörpers angeordnet sind, mit einem zweiten Spannelement (130), so dass das zweite Greifsegment eine zweite Axialkraft in einer zweiten Richtung entgegen der ersten Richtung auf das Rohr aufbringt, wobei die zweite Axialkraft die erste Axialkraft aufhebt; und.
Bewegen der ersten Endplatte und der vierten Endplatte aufeinander zu, mit dem ersten Spannelement;
wobei das Bewegen der dritten Endplatte (38) das Bewegen der dritten Endplatte (38) in einer entgegengesetzten Richtung von der zweiten Endplatte (26) beinhaltet, wenn das erste und zweite Spannelement (126, 130) gespannt und in der vorstehend beschriebenen Weise bedient werden.

13. Verfahren nach Anspruch 12, wobei das erste Greifsegment einen ersten Durchgang (94) definiert, der relativ zu einer Mittelachse des ersten Verbinderkörpers abgewinkelt ist und eine erste Kugel (102) aufnimmt, wobei das zweite Greifsegment einen zweiten Durchgang (98) definiert, der relativ zu einer Mittelachse des zweiten Verbinderkörpers abgewinkelt ist und eine zweite Kugel (102) aufnimmt, wobei der erste Durchgang und der zweite Durchgang in entgegengesetzte Richtungen abgewinkelt sind, wobei das Bewegen der ersten Endplatte und der zweiten Endplatte bewirkt, dass der erste Durchgang die erste Kugel in Kontakt mit der Außenfläche des Rohres drängt, und wobei das Bewegen der dritten Endplatte und der vierten Endplatte bewirkt, dass der zweite Durchgang die zweite Kugel in Kontakt mit der Außenfläche des Rohres drängt.

14. Verfahren nach Anspruch 13, weiter umfassend:
Vorspannen der ersten Kugel aus dem ersten Durchgang heraus; und
Vorspannen der zweiten Kugel aus dem zweiten Durchgang heraus.

15. Verfahren nach Anspruch 13, weiter umfassend:
Bewegen eines ringförmigen ersten Käfigelements (106) aus einer Blockierstellung, in der die erste Kugel daran gehindert wird, sich in Kontakt mit der Außenfläche des Rohres zu bewegen, in eine Freigabestellung, in der die erste Kugel in Kontakt mit der Außenfläche des Rohres beweglich ist; und Bewegen eines ringförmigen zweiten Käfigelements (106) aus einer Blockierstellung, in der die zweite Kugel daran gehindert wird, sich in Kontakt mit der Außenfläche des Rohres zu bewegen, in eine Freigabestellung, in der die zweite Kugel in Kontakt mit der Außenfläche des Rohres beweglich ist.

## Revendications

1. Ensemble de raccord d'extrémité de tuyau configuré pour être monté sur une surface externe d'un tuyau à proximité d'une face d'extrémité axiale du tuyau, l'ensemble de raccord comprenant :
un premier raccord (14) configuré pour être monté de manière sélective sur la surface externe du tuyau, dans lequel le premier raccord comporte un premier corps de raccord cylindrique (30) ayant un premier segment de préhension (86) configuré pour être monté de manière sélective sur la surface externe du tuyau ;
une première plaque d'extrémité (22) et une deuxième plaque d'extrémité (26) positionnées au niveau d'extrémités opposées du premier corps de raccord ;
un deuxième raccord (18) relié au premier raccord et configuré pour être monté de manière sélective sur la surface externe du tuyau, dans lequel le deuxième raccord comporte un deuxième corps de raccord cylindrique (34) ayant un deuxième segment de préhension (90) configuré pour être monté de manière sélective sur la surface externe du tuyau ; et
une troisième plaque d'extrémité (38) et une quatrième plaque d'extrémité (42) positionnées au niveau d'extrémités opposées du deuxième corps de raccord ;
le premier raccord et le deuxième raccord pouvant fonctionner pour appliquer des forces axiales opposées et qui s'annulent afin de monter l'ensemble de raccord sur le tuyau ;
dans lequel l'ensemble de raccord d'extrémité de tuyau comprend en outre : un premier élément de tension (126) couplé à la première plaque d'extrémité, à la deuxième plaque d'extrémité et à la quatrième plaque d'extrémité et pouvant être manipulé pour tirer la première plaque d'extrémité et la deuxième plaque d'extrémité l'une vers l'autre de sorte que le premier segment de préhension s'engage avec la surface externe du tuyau, la manipulation du premier élément de tension tirant la première plaque d'extrémité et la quatrième plaque d'extrémité l'une vers l'autre ; et
un deuxième élément de tension (130) couplé à la troisième plaque d'extrémité et à la quatrième plaque d'extrémité, le deuxième élément de tension pouvant être manipulé pour tirer la troisième plaque d'extrémité et la quatrième plaque d'extrémité l'une vers l'autre de sorte que le deuxième segment de préhension s'engage avec la surface externe du tuyau ;
dans lequel la deuxième plaque d'extrémité (26) et la troisième plaque d'extrémité (38) sont mobiles dans des directions opposées lorsque les premier et deuxième éléments de tension (126, 130) sont tendus et manipulés de la manière décrite ci-dessus.

2. Ensemble de raccord de la revendication 1, dans lequel le premier élément de tension et le deuxième élément de tension peuvent être manipulés de manière essentiellement simultanée pour fournir des forces axiales qui s'annulent afin de monter l'ensemble de raccord sur le tuyau.

3. Ensemble de raccord de la revendication 1, comprenant en outre un joint d'étanchéité primaire (190) engagé avec le premier corps de raccord et positionné de manière adjacente à la première plaque d'extrémité.

4. Ensemble de raccord de la revendication 3, comprenant en outre :
un anneau primaire (78), le joint d'étanchéité primaire étant positionné entre l'anneau primaire et la première plaque d'extrémité ; et
un troisième élément de tension (134) pouvant être manipulé pour amener l'anneau primaire et la première plaque d'extrémité à comprimer le joint d'étanchéité primaire afin de venir en butée contre, et assurer l'étanchéité avec, la surface externe du tuyau et le premier corps de raccord.

5. Ensemble de raccord de la revendication 1, comprenant en outre :
un premier tendeur (162) correspondant au premier élément de tension, le premier tendeur pouvant être actionné pour manipuler le premier élément de tension ; et
un deuxième tendeur (170) correspondant au deuxième élément de tension, le deuxième tendeur pouvant être actionné pour manipuler le deuxième élément de tension.

6. Ensemble de raccord de la revendication 5, dans lequel le premier tendeur et le deuxième tendeur comportent chacun des points de raccord (180) pouvant être engagés par un véhicule télécommandé pour actionner à distance le premier tendeur et le deuxième tendeur.

7. Ensemble de raccord de la revendication 1, comprenant en outre un collier (54) s'étendant à partir de la première plaque d'extrémité, la première plaque d'extrémité et le collier définissant un passage cylindrique (68) configuré pour recevoir le tuyau, le passage ayant une longueur (L) au moins approximativement égale à un diamètre externe du tuyau, la face d'extrémité axiale du tuyau pouvant être positionnée sur la longueur du passage.

8. Ensemble de raccord de la revendication 7, comprenant en outre un adaptateur de bride de tuyau (50) s'étendant à partir du collier pour coupler l'ensemble de raccord à une bride de tuyau.

9. Ensemble de raccord de la revendication 1, dans lequel le premier segment de préhension définit une première voie de passage (94) inclinée par rapport à un axe central du premier corps de raccord et recevant une première bille (102), la première voie de passage étant configurée pour pousser la première bille en contact avec la surface externe du tuyau à mesure que la première plaque d'extrémité et la deuxième plaque d'extrémité sont tirées l'une vers l'autre, dans lequel le deuxième segment de préhension définit une deuxième voie de passage (98) inclinée par rapport à un axe central du deuxième corps de raccord et recevant une deuxième bille (102), la deuxième voie de passage étant configurée pour pousser la deuxième bille en contact avec la surface externe du tuyau lorsque la troisième plaque d'extrémité et la quatrième plaque sont tirées l'une vers l'autre, et dans lequel la première voie de passage et la deuxième voie de passage sont inclinées dans des directions opposées.

10. Ensemble de raccord de la revendication 9, dans lequel un élément de sollicitation (114) est positionné dans chacune de la première voie de passage et de la deuxième voie de passage pour solliciter la première bille et la deuxième bille hors de la première voie de passage et de la deuxième voie de passage, respectivement.

11. Ensemble de raccord de la revendication 10, comprenant en outre :
un premier élément de cage annulaire (106) positionné de manière adjacente au premier segment de préhension, le premier élément de cage définissant une ouverture (110) correspondant à la première voie de passage, le premier élément de cage annulaire étant mobile entre une position de blocage, dans laquelle le premier élément de cage annulaire empêche la première bille d'être sollicitée en contact avec la surface externe du tuyau, et une position de libération, dans laquelle la première bille s'étend partiellement à travers l'ouverture et en contact avec la surface externe du tuyau ; et
un deuxième élément de cage annulaire (106) positionné de manière adjacente au deuxième segment de préhension, le deuxième élément de cage définissant une ouverture (110) correspondant à la deuxième voie de passage, le deuxième élément de cage annulaire étant mobile entre une position de blocage, dans laquelle le deuxième élément de cage annulaire empêche la deuxième bille d'être sollicitée en contact avec la surface externe du tuyau, et une position de libération, dans laquelle la deuxième bille s'étend partiellement à travers l'ouverture et en contact avec la surface externe du tuyau.

12. Procédé de montage d'un ensemble de raccord d'extrémité de tuyau sur une surface externe d'un tuyau à proximité d'une face d'extrémité axiale du tuyau, le procédé comprenant :
le positionnement du tuyau dans un premier raccord (14) ayant un premier corps de raccord (30) comportant un premier segment de préhension (86) configuré pour être monté de manière sélective sur la surface externe du tuyau et dans un deuxième raccord (18) relié au premier raccord et ayant un deuxième corps de raccord (34) comportant un deuxième segment de préhension (90) configuré pour être monté de manière sélective sur la surface externe du tuyau ; et
le fonctionnement du premier raccord et du deuxième raccord pour appliquer des forces axiales opposées et qui s'annulent afin de monter l'ensemble de raccord sur le tuyau, dans lequel le fonctionnement comporte :
avec un premier élément de tension (126), le déplacement d'une première plaque d'extrémité (22) et d'une deuxième plaque d'extrémité (26) positionnées au niveau d'extrémités opposées du premier corps de raccord l'une vers l'autre de sorte que le premier segment de préhension applique au tuyau une première force axiale dans une première direction ;
avec un deuxième élément de tension (130), le déplacement d'une troisième plaque d'extrémité (38) et d'une quatrième plaque d'extrémité (42) positionnées au niveau d'extrémités opposées du deuxième corps de raccord l'une vers l'autre de sorte que le deuxième segment de préhension applique au tuyau une deuxième force axiale dans une deuxième direction opposée à la première direction, la deuxième force axiale annulant la première force axiale ; et
avec le premier élément de tension, le déplacement de la première plaque d'extrémité et de la quatrième plaque d'extrémité l'une vers l'autre ;
dans lequel le déplacement de la troisième plaque d'extrémité (38) comporte le déplacement de la troisième plaque d'extrémité (38) dans une direction opposée à la deuxième plaque d'extrémité (26) lorsque les premier et deuxième éléments de tension (126, 130) sont tendus et manipulés de la manière décrite ci-dessus.

13. Procédé de la revendication 12, dans lequel le premier segment de préhension définit une première voie de passage (94) inclinée par rapport à un axe central du premier corps de raccord et recevant une première bille (102), dans lequel le deuxième segment de préhension définit une deuxième voie de passage (98) inclinée par rapport à un axe central du deuxième corps de raccord et recevant une deuxième bille (102), dans lequel la première voie de passage et la deuxième voie de passage sont inclinées dans des directions opposées, dans lequel le déplacement de la première plaque d'extrémité et de la deuxième plaque d'extrémité amène la première voie de passage à pousser la première bille en contact avec la surface externe du tuyau, et dans lequel le déplacement de la troisième plaque d'extrémité et de la quatrième plaque d'extrémité amène la deuxième voie de passage à pousser la deuxième bille en contact avec la surface externe du tuyau.

14. Procédé de la revendication 13, comprenant en outre :
la sollicitation de la première bille hors de la première voie de passage ; et
la sollicitation de la deuxième bille hors de la deuxième voie de passage.

15. Procédé de la revendication 13, comprenant en outre :
le déplacement d'un premier élément de cage annulaire (106) à partir d'une position de blocage, dans laquelle la première bille est empêchée de se déplacer en contact avec la surface externe du tuyau, vers une position de libération, dans laquelle la première bille peut être déplacée en contact avec la surface externe du tuyau ; et
le déplacement d'un deuxième élément de cage annulaire (106) à partir d'une position de blocage, dans laquelle la deuxième bille est empêchée de se déplacer en contact avec la surface externe du tuyau, vers une position de libération, dans laquelle la deuxième bille peut être déplacée en contact avec la surface externe du tuyau.
